# EUROPEAN PATENT APPLICATION

(11) **EP 4 653 573 A1**
(43) Date of publication of application: **26.11.2025**
(21) Application number: 25753387.7
(22) Date of filing: 11.02.2025
(51) Int. Cl.: C22F 1/10, B21C 37/04, C21D 8/06, C22C 19/05, F02C 7/00

(54) **GH4151 ALLOY BAR AND PREPARATION METHOD THEREFOR AND USE THEREOF**

(30) Priority: 23.02.2024 CN 202410203979
(71) Applicant: Gaona Aero Material Co. Ltd, Beijing 100081 (CN); Sichuan Cisri-Gaona Forging Co. Ltd, Deyang, Sichuan 618099 (CN)
(72) Inventor: XIE, Xingfei, Beijing 100081 (CN); QU, Jinglong, Beijing 100081 (CN); LYU, Shaomin, Beijing 100081 (CN); ZHANG, Xiaomeng, Beijing 100081 (CN); WANG, Chengyu, Beijing 100081 (CN); DU, Jinhui, Beijing 100081 (CN); LUO, Zhiqiang, Beijing 100081 (CN); YANG, Shanjie, Beijing 100081 (CN); TANG, Chao, Beijing 100081 (CN); HOU, Weixue, Beijing 100081 (CN); HUANG, Yiwei, Beijing 100081 (CN)
(74) Representative: Forresters IP LLP
(86) International application number: PCT/CN2025/076784
(87) International publication number: WO 2025/176040

(57) **Abstract**

The present application belongs to the technical field of metal material preparation, in particular to a GH4151 alloy bar as well as its preparation method and application. The method comprises the following steps: (1) subjecting a GH4151 alloy ingot to homogenization heat treatment to obtain a heat-treated bar; (2) forging the heat-treated bar to obtain a forged bar; (3) hot rolling the forged bar to obtain a hot-rolled bar; (4) subjecting the hot-rolled bar to solid solution treatment to obtain a solid solution-treated bar; (5) cold drawing the solid solution-treated bar to obtain a cold-drawn bar; (6) subjecting the cold-drawn bar to aging treatment to obtain a GH4151 alloy bar. The preparation method of the present application can effectively refine the grains, improve the surface dimensional accuracy and improve the tensile strength of the prepared GH4151 alloy bar to make it have excellent mechanical properties.

## Description

### TECHNICAL FIELD

The present application relates to the technical field of metal material preparation, in particular to a GH4151 alloy bar as well as its preparation method and application.

### BACKGROUND ART

GH4151 alloy is the latest developed hard-to-deform nickel-based high-temperature alloy with a service temperature of up to 800°C and can be used in various fasteners for aircraft engines or ground gas turbines. At present, there are patents only on the smelting and forging-cogging of large-sized bars for GH4151 alloy forgings, and there is a lack of patents on the composition, process and performance of small-sized bars (diameter Φ5-Φ40mm) for GH4151 alloy fasteners.

The existing technology often adopts the method of homogenization annealing-cogging treatment-heat treatment after forging to prepare GH4151 small-sized bars for fasteners, which makes the grain size and mechanical properties of the prepared GH4151 small-sized alloy bars cannot meet the use requirements of actual application conditions. Therefore, a preparation method that can effectively homogenize the grain size of GH4151 small-sized alloy bars (diameter Φ5-Φ40mm) and improve their mechanical properties is needed.

### SUMMARY OF THE PRESENT INVENTION

The present application aims to overcome the problem that the grain size and the mechanical properties at high service temperature of small-size GH4151 bars in the prior art cannot meet the requirements, and provides a GH4151 alloy bar as well as its preparation method and application. The prepared GH4151 alloy bar has uniform fine grain structure, high tensile strength and excellent mechanical properties.

In order to achieve the above-mentioned purposes, in a first aspect, the present application provides a method for preparing a GH4151 alloy bar, wherein, the method comprises the following steps:
(1) Subjecting a GH4151 alloy ingot to homogenization heat treatment to obtain a heat-treated bar;
(2) Forging the heat-treated bar to obtain a forged bar;
(3) Hot rolling the forged bar to obtain a hot-rolled bar;
(4) Subjecting the hot-rolled bar to solid solution treatment to obtain a solid solution-treated bar;
(5) Cold drawing the solid solution-treated bar to obtain a cold-drawn bar;
(6) Subjecting the cold-drawn bar to aging treatment to obtain a GH4151 alloy bar.

Preferably, the temperature of the hot rolling is 1100-1200°C, preferably 1130-1180°C.

Preferably, the deformation amount of the hot rolling is 20-50%, preferably 30-40%.

Preferably, the conditions of the cold drawing are: cold drawing the solid solution-treated bar at a drawing speed of 5-20 mm/s, preferably 10-15 mm/s.

Preferably, the deformation amount of the cold drawing is 10-50%, preferably 20-40%.

The second aspect of the present application provides a GH4151 alloy bar obtained by the preparation method mentioned in the first aspect.

Preferably, the GH4151 alloy bar has a grain size of not less than grade 8, a room temperature tensile strength of higher than 1810 MPa, a 800°C tensile strength of higher than 1020 MPa, and a 800°C/500MPa endurance life of longer than 28 h.

The third aspect of the present application provides the application of the GH4151 alloy bar described in the second aspect in fasteners for aircraft engines and/or ground gas turbines.

Through the above technical solution, the present application can achieve the beneficial effects as follows:
The present application adopts special treatment methods, which can effectively refine the grains, improve the surface dimensional accuracy, and improve the tensile strength of the prepared GH4151 alloy bar, so that it has excellent mechanical properties and can meet the production and research needs of fasteners of aircraft engines and ground gas turbines.

### A BRIEF DESCRIPTION OF DRAWINGS

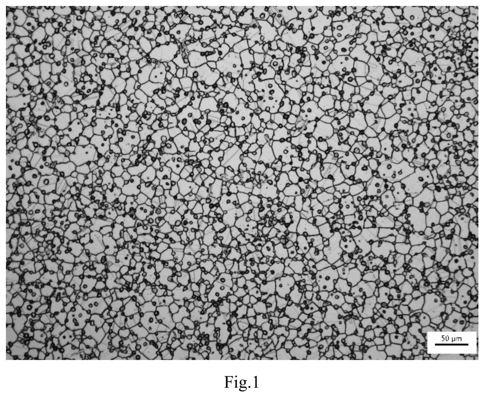

Fig.1 is a high-magnification metallographic structure photograph of the GH4151 alloy bar prepared in Embodiment 1 of the present application.

### DETAILED DESCRIPTION OF THE PRESENT APPLICATION

The endpoints and any values of the ranges disclosed in the present application are not limited to the precise ranges or values, and these ranges or values should be understood to include values close to these ranges or values. For numerical ranges, between the endpoint values of each range, between the endpoint values of each range and the individual point values, and between the individual point values can be combined with each other to obtain one or more new numerical ranges, which should be regarded as specifically disclosed in the present application.

In a first aspect, the present application provides a method for preparing a GH4151 alloy bar, wherein, the method comprises the following steps:
(1) Subjecting a GH4151 alloy ingot to homogenization heat treatment to obtain a heat-treated bar;
(2) Forging the heat-treated bar to obtain a forged bar;
(3) Hot rolling the forged bar to obtain a hot-rolled bar;
(4) Subjecting the hot-rolled bar to solid solution treatment to obtain a solid solution-treated bar;
(5) Cold drawing the solid solution-treated bar to obtain a cold-drawn bar;
(6) Subjecting the cold-drawn bar to aging treatment to obtain a GH4151 alloy bar.

The GH4151 alloy bar prepared by the present application has a bar diameter range of Φ5-Φ40mm. Through the above special treatment method, the present application can effectively refine the grains, improve the surface size accuracy, and improve the tensile strength of the prepared GH4151 alloy bar, which makes the prepared GH4151 alloy bar have excellent mechanical properties.

In the present application, the small-sized GH4151 alloy bar has the conventional meaning in the art, which refers to the GH4151 alloy bar with a diameter range of Φ5-Φ40mm. Compared with the large-sized GH4151 alloy bar (with a diameter greater than 60mm), the small-sized GH4151 alloy bar involved in the present application is mainly used in the field of fastener manufacturing. The bar preparation process includes a cold drawing process, which makes the bar size accuracy and surface quality higher. The room temperature tensile strength of the prepared GH4151 alloy bar is higher than 1810MPa, preferably higher than 2000MPa. At the same time, the tensile strength at 800°C is higher than 1020MPa, and the 800°C/500MPa endurance life is greater than 20h.

The present application does not specifically limit the preparation method of the GH4151 alloy ingot. The GH4151 alloy ingot can be obtained by conventional methods in the art. For example, the GH4151 alloy ingot is prepared by a double smelting method of vacuum induction melting + vacuum consumable remelting to obtain a Φ406 mm ingot, or by a triple smelting method of vacuum induction melting + protective atmosphere electroslag remelting + vacuum consumable remelting to prepare a Φ508 mm ingot.

In the present application, the shape of the GH4151 alloy ingot is not particularly limited, as long as it can meet the requirements of the preparation method. For example, the shape of the GH4151 alloy ingot is cylindrical or rectangular; preferably, the shape of the GH4151 alloy ingot is cylindrical.

In the present application, compared with conventional large-sized GH4151 alloy bars, the preparation method for processing the small-sized GH4151 alloy bars has the technical difficulties of high strength requirements, high difficulty in surface quality control and high difficulty in dimensional accuracy control, and puts forward higher requirements on the control of hot rolling and cold drawing process parameters.

According to the present application, preferably, the process of the homogenization heat treatment comprises:
(1-1) holding the GH4151 alloy ingot at 1120-1140°C for 30-50 h;
(1-2) heating up to 1150-1170°C at a rate of 6-10°C/min and holding for 20-40h;
(1-3) heating up to 1180-1210°C at a rate of 6-10°C/min, holding for 20-40h, and then cooling down to below 500°C at a rate of 2-5°C/min.

In the present application, the equipment for the homogenization heat treatment is not particularly limited, and those skilled in the art can make an adaptive selection according to needs. Preferably, the homogenization heat treatment is performed in an air furnace. Preferably, in step (1-1), the GH4151 alloy ingot is heated from 2-40°C to 1120-1140°C at a heating rate of 6-10°C/min.

In the present application, preferably, the heat-treated bar is cooled by furnace cooling, and the furnace cooling means that the bar is cooled in the furnace as the furnace temperature decreases, and the same is not repeated below. More preferably, after the heat-treated bar is taken out of the furnace, covering with asbestos and air-cooling. The air cooling means that the bar is cooled in the atmosphere.

In the present application, preferably, the homogenization heat treatment performed under the above conditions can eliminate segregation and make the distribution of components in the alloy ingot more uniform. At the same time, low melting point phases can be eliminated, and the mechanical properties of the alloy can be improved.

According to the present application, preferably, the conditions of the forging process include:
(2-1) performing an upsetting treatment on the heat-treated bar to obtain an upsetting ingot;
(2-2) drawing and cogging the upset ingot to obtain a stretched ingot.

According to the present application, preferably, the upsetting treatment comprises the following steps: heating the heat-treated bar from 2-40°C to 1150-1180°C at a heating rate of 5-10°C/min and holding for 10-20h.

More preferably, heating the heat-treated bar from 20-30°C to 1150-1180°C at a heating rate of 6-8°C/min, and holding for 15-20h.

According to the present application, preferably, the pressing speed of the upsetting treatment is 10-40 mm/min, preferably 20-40 mm/min, and the deformation amount of the upsetting treatment is 30-60% to obtain an upsetting ingot.

The deformation amount in the present application refers to the change amount in the size of the blank along the deformation direction before and after processing deformation and will not be repeated hereafter.

In the present application, preferably, the upsetting treatment performed under the above conditions can break up the dendrites, promote the formation of equiaxed crystals, and refine the grain structure.

According to the present application, preferably, the drawing and cogging process comprises the following steps: holding the upsetting ingot at 1150°C-1180°C for 20-30 h, preferably 25-30 h, the pressing speed of the drawing and cogging process is 20-50 mm/min, preferably 30-40 mm/min, the drawing deformation is 30-60%, and obtaining a drawn ingot.

In the present application, preferably, the drawing and cogging process performed under the above conditions can further promote the refinement of equiaxed grain, optimize grain structure, and improve mechanical properties.

According to the present application, preferably, the final forging temperature of the forging process is not less than 1050°C.

According to the present application, preferably, the forging process is performed 8-12 times to obtain the forged bar.

In the present application, the equipment for the forging process is not particularly limited, and those skilled in the art can make an adaptive selection according to needs. Preferably, the forging process is performed on a 4500-8000t fast forging machine to obtain a forged bar of Φ120-Φ150mm.

According to the present application, preferably, the temperature of the hot rolling treatment is 1100-1200°C, preferably 1130-1180°C.

According to the present application, preferably, the deformation amount of the hot rolling is 20-50%, preferably 30-40%.

According to the present application, preferably, the hot rolling process is performed for 5-8 times.

In the present application, the equipment for the hot rolling treatment is not particularly limited, and those skilled in the art can make an adaptive selection according to needs. Preferably, the hot rolling treatment is carried out in a hot continuous rolling mill unit to prepare Φ16-Φ40 mm hot-rolled bars.

In the present application, preferably, the final rolling temperature of the hot rolling treatment is not less than 1000°C, and the surface of the bar is coated with asbestos to reduce the temperature drop.

In the present application, hot rolling treatment under the above conditions can refine the grains and improve the surface dimensional accuracy of the bar.

According to the present application, preferably, the solid solution treatment comprises the following steps: heating the hot-rolled bar from 300-500°C to 1080-1180°C at a heating rate of 5-10°C/min, holding for 2-8h and then cooling to room temperature.

In the present application, the cooling method of the solution treatment is not particularly limited, and those skilled in the art can make an adaptive selection according to needs. Preferably, adopting air cooling or oil cooling.

In the present application, the solid solution treatment performed under the above conditions can improve the tensile strength of the finally obtained GH4151 alloy bar.

According to the present application, preferably, the conditions of the cold drawing treatment are: cold drawing the solid solution-treated bar at a drawing speed of 5-20 mm/s, preferably, the cold drawing speed is 10-15 mm/s.

According to the present application, preferably, the deformation amount of the cold drawing is 10-50%, preferably 20-40%.

According to the present application, preferably, the cold drawing process is performed for 5-8 times.

In the present application, the equipment for the cold drawing treatment is not particularly limited, and those skilled in the art can make an adaptive selection according to needs. Preferably, the cold drawing treatment is carried out on a 15t-60t single-chain or double-chain drawing machine to obtain a Φ5-Φ40mm cold-drawn bar, and the cold drawing treatment is carried out at room temperature.

In the present application, preferably, during the cold drawing process, applying a lubricant to the surface of the bar, and the lubricant may be a conventional lubricant in the art, such as lithium sulfate-based grease.

In the present application, cold drawing treatment under the above conditions can improve the tensile strength of GH4151 alloy bars, make the room temperature tensile strength of the bars higher than 1810MPa, preferably higher than 2000MPa, the 800°C tensile strength higher than 1020MPa, and the 800°C/500MPa endurance life greater than 20h.

According to the present application, preferably, the aging treatment comprises the following steps:
(6-1) heating the cold-drawn bar from 100-300°C to 770-870°C at a heating rate of 2-5°C/min, keeping for 8-16 h, and then cooling to room temperature to obtain a first aging-treated bar;
(6-2) heating the first aging treatment bar from 100-300°C to 620-760°C at a heating rate of 2-5°C/min, keeping for 8-16 h, and then cooling to room temperature.

In the present application, preferably, the aging treatment performed under the above conditions can effectively control the size of the γ' phase in the alloy bar to be 2-10µm, the shape to be spherical and/or ellipsoidal, and dispersedly distributed, thereby improving the high-temperature mechanical properties of the alloy.

According to the present application, preferably, based on the total mass of the GH4151 alloy ingot, the GH4151 alloy ingot contains the following elements: 10.5-11.5wt% Cr, 14.5-15.5wt% Co, 2.5-3wt% Ti, 3-4wt% Al, 2.5-3.5wt% Nb, not more than 1wt% Fe, 4-5wt% Mo, 2.5-3wt% W, 0.002-0.02wt% Mg, 0.025-0.04wt% Zr, 0.05-2wt% Ta, 0.03-0.3wt% Si, 0.01-0.035wt% C, not more than 0.01wt% B, 0.01-0.1wt% Hf and 50-60wt% Ni.

In the present application, adopting the alloy ingot having the above composition is helpful to improve the mechanical properties of the prepared GH4151 alloy bar.

According to a preferred embodiment of the present application, the method for preparing the GH4151 alloy bar comprises the following steps:
(A) Subjecting the GH4151 alloy ingot to homogenization heat treatment, wherein the homogenization heat treatment process comprises:
   (A-1) holding the GH4151 alloy ingot at 1120-1140°C for 30-50 h;
   (A-2) heating to 1150-1170°C at a rate of 6-10°C/min and holding for 20-40h;
   (A-3) heating to 1180-1210°C at a rate of 6-10°C/min, holding for 20-40h, and then lowering the temperature to below 500°C at a rate of 2-5°C/min;
(B) subjecting the heat-treated bar to forging treatment, wherein the forging treatment conditions include:
   (B-1) subjecting the heat-treated bar to upsetting treatment, wherein the upsetting treatment comprises the following steps: heating the heat-treated bar from 2-40°C to 1150°C-1180°C at a heating rate of 5-10°C/min and holding for 10-20 h;
   the pressing speed of the upsetting treatment is 10-40 mm/min, and the upsetting deformation amount is 30-60%, and obtaining an upsetting ingot;
   (B-2) drawing and cogging the upsetting ingot, the drawing and cogging comprises the following steps: holding the upsetting ingot at 1150-1180° C for 20-30 h, the pressing speed of the drawing and cogging is 20-50 mm/min, the drawing deformation amount is 30-60%, and obtaining a drawn ingot;
   (B-3) performing the forging process for 8 to 12 times to obtain the forged bar;
(C) hot rolling the forged bar, wherein the temperature of the hot rolling is 1130-1180° C, and the deformation amount of the hot rolling is 30-40%;
   performing the hot rolling treatment for 5~ 8 times to obtain a hot-rolled bar;
(D) subjecting the hot-rolled bar to solid solution treatment, wherein the solid solution treatment comprises the following steps: heating the hot-rolled bar from 300-500°C to 1080-1180°C at a heating rate of 5-10°C/min, holding for 2-8 h, and then cooling to room temperature to obtain a solid solution-treated bar;
(E) cold drawing the solid solution bar, wherein the condition of the cold drawing includes cold drawing the solid solution-treated bar at a drawing speed of 5-20 mm/s, and the deformation amount of the cold drawing is 10-50%;
   performing the cold drawing process for 5 ~8 times to obtain a cold-drawn bar;
(F) subjecting the cold-drawn bar to aging treatment, wherein the aging treatment comprises the following steps:
   (F-1) heating the cold-drawn bar from 100-300°C to 770-870°C at a heating rate of 2-5°C/min, holding for 8-16 h, and then cooling to room temperature to obtain a first aging-treated bar;
   (F-2) heating the first aging-treated bar from 100-300°C to 620-760°C at a heating rate of 2-5°C/min, holding for 8-16 h, and then cooling to room temperature to obtain a GH4151 alloy bar.

The second aspect of the present application provides a GH4151 alloy bar obtained by the preparation method mentioned in the first aspect.

According to the present application, preferably, the GH4151 alloy bar has a grain size of not less than grade 8, a room temperature tensile strength of higher than 1810 MPa, a 800°C tensile strength of higher than 1020 MPa, and a 800°C/500MPa endurance life of greater than 28 h.

The third aspect of the present application provides the application of the GH4151 alloy bar mentioned in the second aspect in fasteners for aircraft engines and/or ground gas turbines.

The present application will be described in detail below through embodiment and comparative embodiment. In the following embodiments and comparative embodiments, unless otherwise specified, all raw materials used can be obtained from commercial channels.
(1) Room temperature tensile strength: GB/T 228.1 Tensile tests on metallic materials Part 1: Room temperature test methods.
(2) Tensile strength at 800°C: GB/T 228.2 Tensile tests on metallic materials Part 2: High temperature test methods.
(3) 800°C/500MPa endurance life: GB/T 2039 Metal materials uniaxial tensile creep and endurance test method.
(4) Grain size: GB/T 6394 Method for determining average grain size of metals.

### Embodiment 1

Preparing a GH4151 alloy ingot (ingot shape: Φ508±20mm) by triple process smelting, and the components of the GH4151 alloy ingot are as follows: 11wt% Cr, 15wt% Co, 2.8wt% Ti, 3.5wt% Al, 3.2wt% Nb, 0.8wt% Fe, 4.5wt% Mo, 2.8wt% W, 0.01wt% Mg, 0.03wt% Zr, 1.0wt% Ta, 0.05wt% Si, 0.02wt% C, 0.005wt% B, 0.05wt% Hf and 55.235wt% Ni.

Treating the GH4151 alloy ingot by the means as follows:
(A) subjecting the GH4151 alloy ingot to homogenization heat treatment, wherein the process of the homogenization heat treatment comprises:
   (A-1) holding the GH4151 alloy ingot at 1140°C for 50 h;
   (A-2) heating to 1170°C at a rate of 8°C/min and holding for 40h;
   (A-3) heating to 1200°C at a rate of 8°C/min, holding for 40h, and then lowering the temperature with the furnace to below 500°C at a rate of 5°C/min, taking out, covering with asbestos, and air cooling;
(B) subjecting the heat-treated bar to forging treatment, wherein the conditions of the forging treatment include:
   (B-1) subjecting the heat-treated bar to upsetting treatment, wherein the upsetting treatment comprises the following steps: heating the heat-treated bar from 20°C to 1180°C at a heating rate of 8°C/min and holding for 20 h;
   controlling the pressing speed of the upsetting treatment be 40 mm/min and the upsetting deformation amount be 40% to obtain an upsetting ingot;
   (B-2) drawing and cogging the upsetting ingot, the drawing and cogging comprises the following steps: holding the upsetting ingot at 1180°C for 30 h, controlling the pressing speed of the drawing and cogging be 40mm/min and the drawing deformation amount be 50% to obtain a drawn ingot;
   (B-3) performing the forging process for 10 times, controlling the final forging temperature be 1100°C to obtain a Φ120mm forged bar;
(C) hot rolling the forged bar, wherein the temperature of the hot rolling is 1160°C, and the hot rolling deformation amount is 30%;
   performing the hot rolling treatment for 6 times, controlling the final rolling temperature be 1050°C to obtain a Φ35mm hot-rolled bar;
(D) subjecting the hot-rolled bar to solid solution treatment, wherein the solid solution treatment comprises the following steps: adding the hot-rolled bar into furnace at 300°C, heating to 1100°C at a heating rate of 10°C/min, holding for 8 h, and then air cooling to room temperature to obtain a solid solution-treated bar;
(E) cold drawing the solid solution-treated bar, wherein the condition of the cold drawing treatment is: cold drawing the solid solution-treated bar at a drawing speed of 10 mm/s after applying lithium sulfate grease on the surface of the bar, and the cold drawing deformation amount is 30%;
   performing the cold drawing treatment for 6 times to obtain a Φ25mm cold-drawn bar;
(F) subjecting the cold-drawn bar to aging treatment, wherein the aging treatment comprises the following steps:
   (F-1) heating the cold-drawn bar from 100°C to 800°C at a heating rate of 5°C/min, holding for 12 h, and then air cooling to room temperature to obtain a first aging-treated bar;
   (F-2) heating the first aging-treated bar from 100°C to 700°C at a heating rate of 5°C/min, holding for 12 h, and then air cooling to room temperature to obtain a GH4151 alloy bar.

### Embodiment 2

Using the same GH4151 alloy ingot to Embodiment 1, and treating the GH4151 alloy ingot by the means as follows:
(A) subjecting the GH4151 alloy ingot to homogenization heat treatment, wherein the process of the homogenization heat treatment comprises:
   (A-1) holding the GH4151 alloy ingot at 1140°C for 50 h;
   (A-2) heating to 1160°C at a rate of 8°C/min and holding for 40h;
   (A-3) heating to 1200°C at a rate of 8°C/min, holding for 40h, and then lowering the temperature with the furnace to below 500°C at a rate of 5°C/min, taking out, covering with asbestos, and air cooling;
(B) subjecting the heat-treated bar to forging treatment, wherein the conditions of the forging treatment include:
   (B-1) subjecting the heat-treated bar to upsetting treatment, wherein the upsetting treatment comprises the following steps: heating the heat-treated bar from 20°C to 1160°C at a heating rate of 8°C/min and holding for 20 h;
   adjusting the pressing speed of the upsetting treatment be 40 mm/min and the upsetting deformation amount be 30% to obtain an upsetting ingot;
   (B-2) drawing and cogging the upsetting ingot, the drawing and cogging comprises the following steps: holding the upsetting ingot at 1160°C for 30 h, controlling the pressing speed of the drawing and cogging be 40mm/min and the drawing deformation amount be 40% to obtain a drawn ingot;
   (B-3) performing the forging process for 10 times, controlling the final forging temperature be 1100°C to obtain a Φ120mm forged bar;
(C) hot rolling the forged bar, wherein the hot rolling temperature is 1140°C, and the hot rolling deformation amount is 30%;
   performing the hot rolling treatment for 6 times, controlling the final rolling temperature be 1050°C to obtain a Φ35mm hot-rolled bar;
(D) subjecting the hot-rolled bar to solid solution treatment, wherein the solid solution treatment comprises the following steps: adding the hot-rolled bar into furnace at 300°C, heating to 1100°C at a heating rate of 10°C/min, holding for 8 h, and then air cooling to room temperature to obtain a solid solution-treated bar;
(E) cold drawing the solid solution-treated bar, wherein the condition of the cold drawing treatment is: cold drawing the solid solution-treated bar at a drawing speed of 10 mm/s after applying lithium sulfate grease on the surface of the bar, and the cold drawing deformation amount is 30%;
   performing the cold drawing process for 6 times to obtain a Φ25mm cold-drawn bar;
(F) subjecting the cold-drawn bar to aging treatment, wherein the aging treatment comprises the following steps:
   (F-1) heating the cold-drawn bar from 100°C to 820°C at a heating rate of 5°C/min, holding for 16 h, and then air cooling to room temperature to obtain a first aging-treated bar;
   (F-2) heating the first aging-treated bar from 100°C to 720°C at a heating rate of 5°C/min, holding for 10 h, and then air cooling to room temperature to obtain a GH4151 alloy bar.

### Embodiment 3

Using the same GH4151 alloy ingot to Embodiment 1, and treating the GH4151 alloy ingot by the means as follows:
(A) subjecting the GH4151 alloy ingot to homogenization heat treatment, wherein the process of the homogenization heat treatment comprises:
   (A-1) holding the GH4151 alloy ingot at 1120°C for 50 h;
   (A-2) heating to 1170°C at a rate of 10°C/min and holding for 40h;
   (A-3) heating to 1200°C at a rate of 10°C/min, holding for 40h, and then lowering the temperature with the furnace to below 500°C at a rate of 5°C/min, taking out, covering with asbestos, and air cooling;
(B) subjecting the heat-treated bar to forging treatment, wherein the conditions of the forging treatment include:
   (B-1) subjecting the heat-treated bar to upsetting treatment, wherein the upsetting treatment comprises the following steps: heating the heat-treated bar from 20°C to 1150°C at a heating rate of 10°C/min and holding for 20 h;
   adjusting the pressing speed of the upsetting treatment be 40 mm/min and the upsetting deformation amount be 50% to obtain an upsetting ingot;
   (B-2) drawing and cogging the upsetting ingot, the drawing and cogging comprises the following steps: holding the upsetting ingot at 1150°C for 20 h, controlling the pressing speed of the drawing and cogging be 30mm/min and the drawing deformation amount be 30% to obtain a drawn ingot;
   (B-3) performing the forging process for 8 times, controlling the final forging temperature be 1050°C to obtain a Φ150mm forged bar;
(C) hot rolling the forged bar, wherein the hot rolling temperature is 1130°C, and the hot rolling deformation amount is 30%;
   performing the hot rolling treatment for 5 times, controlling the final rolling temperature be 1050°C to obtain a Φ40mm hot-rolled bar;
(D) subjecting the hot-rolled bar to solid solution treatment, wherein the solid solution treatment comprises the following steps: adding the hot-rolled bar into furnace at 300°C, heating to 1080°C at a heating rate of 5°C/min, holding for 8 h, and then air cooling to room temperature to obtain a solid solution-treated bar;
(E) cold drawing the solid solution-treated bar, wherein the condition of the cold drawing treatment is: cold drawing the solid solution-treated bar at a drawing speed of 5mm/s after applying lithium sulfate grease on the surface of the bar, and the cold drawing deformation amount is 20%;
   performing the cold drawing process for 8 times to obtain a Φ35mm cold-drawn bar;
(F) subjecting the cold-drawn bar to aging treatment, wherein the aging treatment comprises the following steps:
   (F-1) heating the cold-drawn bar from 100°C to 870°C at a heating rate of 5°C/min, holding for 16 h, and then air cooling to room temperature to obtain a first aging-treated bar;
   (F-2) heating the first aging-treated bar from 100°C to 760°C at a heating rate of 5°C/min, holding for 16 h, and then air cooling to room temperature to obtain a GH4151 alloy bar.

### Embodiment 4

Using the same GH4151 alloy ingot to Embodiment 1 and preparing a GH4151 alloy bar according to the method of Embodiment 1 with the difference that the hot-rolling temperature in the step (C) is 1190°C.

### Comparative embodiment 1

Using the same GH4151 alloy ingot to Embodiment 1, and treating the GH4151 alloy ingot by the means as follows:
(A) subjecting the GH4151 alloy ingot to homogenization heat treatment, wherein the process of the homogenization heat treatment comprises:
   (A-1) holding the GH4151 alloy ingot at 1120°C for 50 h;
   (A-2) heating to 1170°C at a rate of 10°C/min and holding for 40h;
   (A-3) heating to 1200°C at a rate of 10°C/min, holding for 40h, and then lowering the temperature with the furnace to below 500°C at a rate of 5°C/min, taking out, covering with asbestos, and air cooling;
(B) hot rolling the heat-treated bar, wherein the hot rolling temperature is 1130°C, and the hot rolling deformation amount is 30%;
   performing the hot rolling treatment for 5 times, controlling the final rolling temperature be 1050°C to obtain a Φ40mm hot-rolled bar;
(C) subjecting the hot-rolled bar to solid solution treatment, wherein the solid solution treatment comprises the following steps: adding the hot-rolled bar into furnace at 300°C, heating to 1080°C at a heating rate of 5°C/min, holding for 8 h, and then air cooling to room temperature to obtain a solid solution-treated bar;
(D) cold drawing the solid solution-treated bar, wherein the condition of the cold drawing treatment is: cold drawing the solid solution-treated bar at a drawing speed of 5mm/s after applying lithium sulfate grease on the surface of the bar, and the cold drawing deformation amount is 20%;
   performing the cold drawing process for 8 times to obtain a Φ35mm cold-drawn bar;
(E) subjecting the cold-drawn bar to aging treatment, wherein the aging treatment comprises the following steps:
   (E-1) heating the cold-drawn bar from 100°C to 870°C at a heating rate of 5°C/min, holding for 16 h, and then air cooling to room temperature to obtain a first aging-treated bar;
   (E-2) heating the first aging-treated bar from 100°C to 760°C at a heating rate of 5°C/min, holding for 16 h, and then cooling to room temperature to obtain a GH4151 alloy bar.

### Comparative embodiment 2

Using the same GH4151 alloy ingot to Embodiment 1 and preparing a GH4151 alloy bar according to the method of Embodiment 1 with the difference of without performing the hot-rolling treatment.

### Comparative embodiment 3

Using the same GH4151 alloy ingot to Embodiment 1 and preparing a GH4151 alloy bar according to the method of Embodiment 1 with the difference of without performing the cold-drawing treatment.

### Test embodiment 1

Testing the obtained GH4151 alloy bars, and the test results are shown in Table 1.

Fig.1 is a high-magnification metallographic microstructure photograph of the GH4151 alloy bar prepared in Embodiment 1. It can be seen from Fig.1 that the precipitated phase is evenly distributed, and the microstructure of the bar meets the requirements of the uniform fine grain.

**Table 1**

| | Room-temperature tensile strength (MPa) | 800°C tensile strength (MPa) | 800°C/500M Pa endurance life (h) | Grain size (grade) |
|---|---|---|---|---|
| Embodiment 1 | 2076 | 1160 | 50 | 9.5 |
| Embodiment 2 | 2022 | 1115 | 46 | 9 |
| Embodiment 3 | 1982 | 1071 | 42 | 8.5 |
| Embodiment 4 | 1786 | 986 | 31 | 7 |
| Comparative embodiment 1 | 1760 | 975 | 23 | 7 |
| Comparative embodiment 2 | 1773 | 920 | 41 | 6 |
| Comparative embodiment 3 | 1675 | 881 | 27 | 8 |

It can be seen from the results in Table 1 that the GH4151 alloy bar prepared by the preparation method of the present application has a grain size of not less than grade 8, a room temperature tensile strength of higher than 1810 MPa, a 800°C tensile strength of higher than 1020 MPa, and a 800°C/500MPa endurance life of more than 28 h, has finer grains and more excellent mechanical properties.

The preferred embodiments of the present application are described in detail above, but the present application is not limited thereto. Within the technical concept of the present application, the technical solution of the present application can be subjected to a variety of simple modifications, including the combination of various technical features in any other suitable manner, and these simple modifications and combinations should also be regarded as the contents disclosed by the present application and belong to the protection scope of the present application.

## Claims

1. A preparation method of a GH4151 alloy bar, **characterized in that**, the method comprises the following steps:
(1) subjecting the GH4151 alloy ingot to homogenization heat treatment to obtain a heat-treated bar;
(2) subjecting the heat-treated bar to forging treatment to obtain a forged bar;
(3) subjecting the forged bar to hot rolling treatment to obtain a hot-rolled bar;
(4) subjecting the hot-rolled bar to solid solution treatment to obtain a solid solution-treated bar;
(5) subjecting the solid solution-treated bar to cold drawing treatment to obtain a cold-drawn bar;
(6) subjecting the cold-drawn bar to aging treatment to obtain a GH4151 alloy bar.

2. The preparation method according to claim 1, wherein, the homogenization heat treatment comprises:
(1-1) holding the GH4151 alloy ingot at 1120-1140°C for 30-50 h;
(1-2) heating up to 1150-1170°C at a rate of 6-10°C/min and holding for 20-40h;
(1-3) heating up to 1180-1210°C at a rate of 6-10°C/min, holding for 20-40h, and then cooling down to below 500°C at a rate of 2-5°C/min.

3. The preparation method according to claim 1, wherein, a condition of the forging treatment comprises:
(2-1) performing an upsetting treatment on the heat-treated bar to obtain an upsetting ingot;
(2-2) performing drawing and cogging on the upsetting ingot to obtain a drawn ingot;
preferably, a final forging temperature of the forging treatment is not less than 1050°C;
preferably, performing the forging treatment by 8-12 times to obtain a forged bar.

4. The preparation method according to claim 3, wherein, the upsetting treatment comprises following steps: heating the heat-treated bar from 2-40°C to 1150-1180°C at a heating rate of 5-10°C/min and holding for 10-20h to obtain an upsetting ingot;
preferably, a pressing speed of the upsetting treatment is 10-40 mm/min, and a upsetting deformation amount is 30%-60%.

5. The preparation method according to claim 3, wherein, the drawing and cogging comprises the following steps: holding the upsetting ingot at 1150°C-1180°C for 20-30 h, wherein, a pressing speed of the drawing and cogging is 20-50 mm/min, and a drawing deformation amount is 30%-60%, and a drawn ingot is obtained.

6. The preparation method according to claim 1, wherein, a temperature of the hot rolling treatment is 1100-1200°C, preferably 1130-1180°C;
preferably, a hot rolling deformation amount is 20%-50%, preferably 30%-40%;
preferably, performing the hot rolling treatment for 5-8 times.

7. The preparation method according to claim 1, wherein, the solid solution treatment comprises the following steps: heating the hot-rolled bar from 300-500°C to 1080-1180°C at a heating rate of 5-10°C/min, holding for 2-8h and then cooling to room temperature.

8. The preparation method according to claim 1, wherein, conditions of the cold drawing treatment are: cold drawing the solid solution-treated bar at a drawing speed of 5-20 mm/s, preferably, the drawing speed is 10-15 mm/s;
preferably, a cold drawing deformation amount is 10%-50%, preferably 20%-40%;
preferably, performing the cold drawing treatment for 5-8 times.

9. The preparation method according to claim 1, wherein, the aging treatment comprises the following steps:
(6-1) heating the cold-drawn bar from 100-300°C to 770-870°C at a heating rate of 2-5°C/min, holding for 8-16 h, and then cooling to room temperature to obtain a first aging-treated bar;
(6-2) heating the first aging-treated bar from 100-300°C to 620-760°C at a heating rate of 2-5°C/min, holding for 8-16 h, and then cooling to room temperature.

10. The preparation method according to claim 1, wherein, based on a total mass of the GH4151 alloy ingot, the GH4151 alloy ingot comprises the following elements: 10.5-11.5wt% Cr, 14.5-15.5wt% Co, 2.5-3wt% Ti, 3-4wt% Al, 2.5-3.5wt% Nb, not more than 1wt% Fe, 4-5wt% Mo, 2.5-3wt% W, 0.002-0.02wt% Mg, 0.025-0.04wt% Zr, 0.05-2wt% Ta, 0.03-0.3wt% Si, 0.01-0.035wt% C, not more than 0.01wt% B, 0.01-0.1 wt% Hf and 50-60wt% Ni.

11. A GH4151 alloy bar obtained by the preparation method according to any one of claims 1-10;
preferably, the GH4151 alloy bar has a grain size of not less than grade 8 with a grain size variation between the core and the edge less than 2 grades, a room temperature tensile strength of higher than 1810 MPa, a 800°C tensile strength of higher than 1020 MPa, and a 800°C/500MPa endurance life of longer than 28 h.

12. An application of the GH4151 alloy bar according to claim 11 in fasteners for aircraft engines and/or ground gas turbines.
